Europäisches Patentamt

European Patent Office

Office européen des brevets

(19)

(11) **EP 1 213 561 B1**

(12) **EUROPEAN PATENT SPECIFICATION**

(45) Date of publication and mention
of the grant of the patent:
**31.08.2005 Bulletin 2005/35**

(51) Int Cl.$^7$: **G01C 22/00**, G01C 23/00,
G01P 3/00, G01P 15/00

(21) Application number: **00127068.5**

(22) Date of filing: **11.12.2000**

(54) **Bicycle inclinometer using accelerometer and wheel revolution sensor to compute instantaneous road gradient, uphill power, altitude and frequency of pedalling**

Fahrrad-Neigungsmesser mit Beschleunigungssensor und Raddrehzahl-Sensor zur Berechnung der Fahrbahnneigung, der bergauf erzeugten Energie, der Höhenlage und der Pedaltrittfrequenz

Inclinomètre de bicyclette avec un accéléromètre et un capteur de mesure de la rotation d'une roue pour calculer l'inclinaison de la chaussée, l'énergie en montant, l'altitude et la fréquence des pédales

(84) Designated Contracting States:
**AT BE CH CY DE DK ES FI FR GB GR IE IT LI LU MC NL PT SE TR**
(84) Designated Contracting States:
**AT BE CH CY DE DK ES FI FR GB GR IE IT LI LU
MC NL PT SE TR**

(43) Date of publication of application:
**12.06.2002 Bulletin 2002/24**

(73) Proprietor: **Ghislanzoni, Luca
23900 Lecco (IT)**

(72) Inventor: **Ghislanzoni, Luca
23900 Lecco (IT)**

(56) References cited:
**EP-A- 0 325 196          EP-A- 0 810 439
EP-A- 0 825 568          WO-A-99/44016
US-A- 5 737 247**

**Description**

The use of cyclocomputers is nowadays commonplace. Several devices are commercially available which feature various functions: total and partial distance, instantaneous speed, average speed, maximum speed, minimum speed, trip time duration, etc.

Recently some manufacturers have introduced models featuring an altimeter function, which makes use of the atmospheric pressure to compute altitude. These devices can also compute the average road gradient, but the barometric method used possesses a typical vertical resolution of about 5m. Hence, to obtain a reasonably accurate indication of the road gradient, it is necessary to cover a distance of some hundreds meters. This method is also inherently sensitive to variations in atmospheric pressure due to change in weather, which could take place during the trip. Furthermore the average road gradient computed in this way can only be an approximation, coinciding with the true value only when covering long stretches of constant gradient.

Other techniques for road gradient measurement rely on the accurate measurement of the angular position of a pendulum. One such technique is disclosed in U.S. Pat. No.. US-A-5 737 247, Mark Ragoza et al., 7.April 1998 (referred here as D1), and a similar one in European Pat. No. EP-A-0 325 196, Helmut Hechinger, 26. July 1989 (referred here as D2).

Bicycle power meter are also already available on the market, and usually rely on the measurement of the torque generated, which is then multiplied with the measured speed to obtain the instantaneous power. Various methods exist for the measurement of the torque, generally involving the use of strain gages, with each manufacturer using its own preferred solution. The resulting device is accurate, capable to measure the power generated in any situation, but expensive.

The measurement of power is very useful for an accurate assessment of the cyclist fitness, when correlated with the heart bit rate. To this purpose the cyclist would typically chose a preferred stretch of road on which to generate a defined power, by monitoring his heart bit rate (several portable heart beat rate monitors are commercially available) at that given power he is then able to verify his training fitness. It shall now be remarked that the above procedure for the evaluation of fitness does not require a power meter able to measure the generated power in all circumstances, but it would suffice a device capable of measuring power only along those stretches selected for this purpose. The device described here limits the accurate measurement of power, for the purpose of assessing training fitness, only to stretches going uphill, and therefore getting away with a much simpler, and less expensive, device.

The solution described here obtains the simultaneous measurements of road gradient and power generated going uphill, by processing the output signals of an accelerometer and of a conventional magnetic pick-up.

The inventive step consists in combining a suitable accelerometer (such as a micro machined type) with a conventional magnetic pick-up (such as a reed contact, switched by a magnet at each wheel revolution), and to process the corresponding output signals by suitable means (such as a microprocessor), in the following way:

1) Measure the time duration of one wheel revolution, which is a function of the bicycle linear speed.
2) Measure the time difference between two successive wheel revolutions, which is a function of the bicycle linear acceleration.
3) Measure the output signal of the accelerometer (placed with its measurement axis along the direction of travel), which is a function of the bicycle linear acceleration and of the component of the acceleration of gravity along the measurement axis.
4) Compensate the output signal of the accelerometer by subtracting the effect of the bicycle linear acceleration, as obtained from the measurement described at point 2), in order to extract the component due to the gravity field only.
5) Process the said value of the gravity field component to compute the actual road gradient.
6) Process the computed value of the road gradient, the bicycle linear speed, and the total mass of bicycle and cyclist, so as to obtain the value of the power being generated going uphill.
7) Process the computed value of the road gradient, together with the value of the distance measured by counting the wheel's revolutions, to periodically compute and update the value of the total distance covered in the vertical direction, i.e.: the relative altitude with respect to the starting point.
8) Process the output signal of the accelerometer in order to extract the frequency of the modulation noticeable on top of it, and corresponding to the frequency of pedalling.

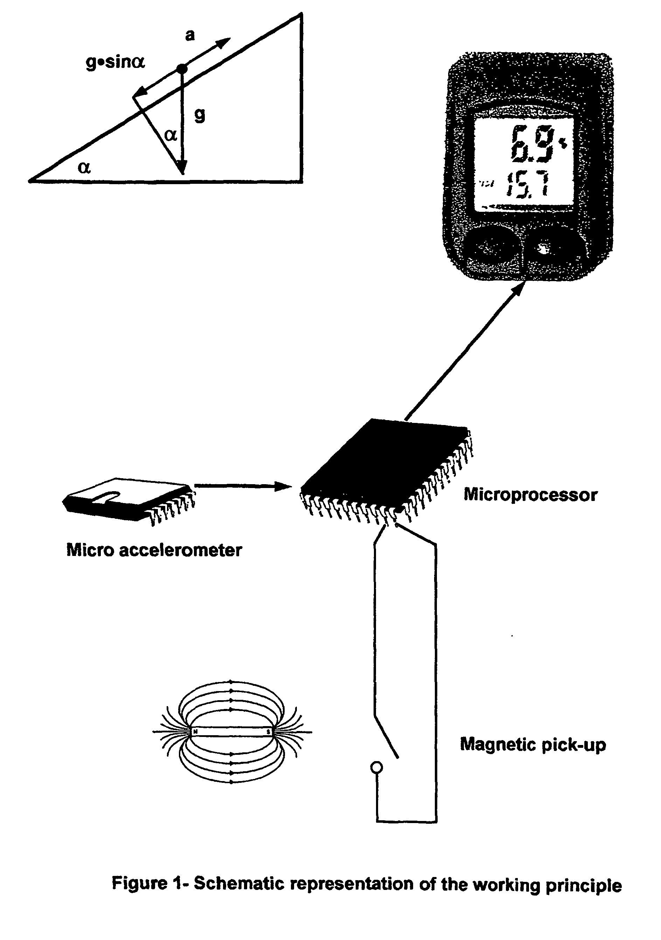

Figure 1 schematically represents the working principle of the device. It also shows the actual prototype The prototype was realised using a commercial accelerometer, the ADXL202 from Analog Devices, built on a single monolithic IC, and suitable for battery powered applications. The magnetic pick-up is of the conventional type, based on a reed contact closed (or opened) when a magnet fixed to the wheel passes by. The microprocessor measures the time interval, $T$, between two passes of the magnet, and therefore it can compute, by knowing the wheel circumference, $L$, the bicycle speed. Processing the time difference between two adjacent revolutions, also the bicycle linear acceleration, $\alpha$, can be computed. Let us now suppose, for simplicity, that the accelerometer measurement axis coincides with the direction of travel, then, said angle $\alpha$ corre-

sponds to the road gradient and the output of the accelerometer will be proportional to $g\sin\alpha - \alpha$. As $\alpha$ is computed by processing the signal from the magnetic pickup, the contribution due to the gravity field only, $g\sin\alpha$, can easily be extracted, and hence also the true road gradient $100\ tg\alpha$ (in degree %). In practice it is very difficult to make sure that the accelerometer main axis coincides with the direction of travel, due to the inevitable fact that when mounting the devices at a suitable position on the bicycle one always introduces an offset angle. To compensate for this the device allows for a specific calibration procedure: in a location where the road gradient is larger than 0%, select the calibration menu, select the mounting offset calibration function, position the bicycle uphill, press the required button, wait till the display indicates that the uphill reading is completed, position the bicycle downhill, press the required button, wait till the display indicates that the downhill reading is completed. Dividing by 2 the difference of the two readings, the microprocessor is then able to compute the offset angle, and hence compensate for the fact that the accelerometer measurement axis does not coincide with the direction of travel. Furthermore one has also to consider that when cycling the output signal of the accelerometer varies due to the effect of vibrations and oscillations caused by road unevenness or by movements of the cyclist, these variations in the output signal shall be filtered out in some way. In practice, it has been verified that a very effective way to filter out all these spurious signals consists in averaging all the samples taken over a time interval of about 10s. In particular, the prototype showed a very satisfying behaviour when the display indications were updated every second, but with the mean value of all the samples taken during the about 10s (meaning: the value closest to 10s, but corresponding to an integer number $n$ of wheel revolutions) preceding the current refreshing of display indications Knowing the value of the true road gradient, and of the time duration of each wheel revolution, allows the computation of the power generated by the cyclist. As a matter of fact, when travelling uphill most of the mechanical work generated goes into increasing the gravitational potential energy of the total mass, $M$, of cyclist plus bicycle, and this because the part dissipated by mechanical friction, rolling friction, and aerodynamic drag, becomes typically negligible at road gradients larger than about 5%. Though this is an indirect method of measuring power, its accuracy is more than sufficient to allow the verification of training fitness described above.

Finally, said $n$ the number or wheel revolutions counted during the mentioned filtering time interval of around 10s, and for road gradients larger than about 5%, the microprocessor computes the mean power, $P$, generated along the previous stretch of length $nL$ as (here for $g\sin\alpha$ it is meant the mean value over the said about 10s)

$$P = \frac{M\ g\ \sin\alpha\ nL}{\sum_{1}^{n} T_i} \qquad (1)$$

where the $T_i$ are the time durations of each one of the $n$ wheel revolutions counted along the stretch $nL$.

As said above, the method described by equation (1) is perfectly suitable for a verification of somebody's training fitness, when the fitness test is carried out on roads with gradient larger than about 5%. It is also obvious that it would not yield any useful indication of power on flat roads, when most of the mechanical work goes into frictions and aerodynamic drag. However, it is possible to obtain a reasonable indication of generated power also when travelling along flat roads. To this purpose a special calibration procedure has been developed:

• travelling along a stretch of constant gradient, such as for example a flat road, the cyclist stops cycling and presses a button on the device, at that instant the microprocessor records the actual value of the speed, $V1$;

• when a suitable number of seconds $t$ have elapsed, and during which the cyclist should refrain from cycling, a second reading of speed, $V2$, is automatically carried out by the microprocessor;

• Let us now indicate with $Fp$ the component along the direction of travelling of the total weight cyclist + bicycle ($Fp$ is $M\ g\ \sin\alpha$, and of course along flat roads it would be $Fp=0$), the overall force resulting from all resistances to motion, due to frictions and aerodynamic drag, can be approximated by;

$$F=(M(V1-V2)/t)-Fp \qquad (2)$$

The microprocessor takes care to repeat this procedure for different values of $V1$, in order to build some reference table or some calibration function, useful to extrapolate the total resistance to motion at any speed $F(V)$. In this way it becomes possible to improve the accuracy of the computed power, at any speed $V$, by adding the corrective factor:

$$dP = V\ F(V) \qquad (3)$$

and obtaining in this way also the possibility to display a reasonable estimate of the power generated, even when travelling along flat roads.

The knowledge of $\sin\alpha$ allows the computation of the total distance travelled in the vertical direction, or relative altitude, $H$. The prototype has demonstrated a very accurate indication of $H$, when its value is updated every about 10s (also here it is meant: the value closest to 10s, but corresponding to an integer number *n* of wheel revolutions), so as to refresh the value of the following running sum:

$$H = L \sum_k n_k \sin\alpha_k \qquad (4)$$

The prototype was tested on a road of known altimetry, yielding an error of only +10m, over an actual height difference of 493m.

The frequency of pedalling is another training parameter considered useful by cyclists, and in the already existing commercial types it is usually obtained by mounting a dedicated magnetic pick-up to count pedal revolutions.

For the solution described here a filtering algorithm was developed, which can extract the frequency of the oscillations noticeable on the accelerometer output signal, and resulting from the push on the pedals by part of the cyclist. In this way no additional sensors are needed, hence simplifying the practical use of the device. The gear ratio can also be indicated, being simply the ratio: frequency of pedalling/wheel revolutions frequency.

The prototype included also the computation of functions typical of conventional cyclocomputers: total and partial distance, instantaneous speed, average speed, maximum speed, minimum speed, trip time duration, etc.

## Claims

1. A bicycle inclinometer comprising:

   a wheel revolution sensor, such as a conventional magnetic pick-up; and
   a microprocessor;

   **characterised in that**
   an accelerometer is mounted on the bicycle with its measurement axis parallel to the direction of travel and is arranged for generating an output signal proportional to the total acceleration $g=sin\alpha-\alpha$ along its axis;
   said microprocessor is arranged for

   - processing the output signals of said wheel revolution sensor and of said accelerometer;
   - compensating an offset angle between the accelerometer axis and the direction of travel, due to non ideal mounting of the device on the bicycle, by a calibration procedure requiring to point the bicycle uphill and then downhill or vice versa; dividing the difference of the two measurements by two and yielding the value of said offset angle;
   - sampling the output signal of the accelerometer during a suitable time interval for obtaining a mean value of the total acceleration $g=sin\alpha - \alpha$ and corresponding to an integer number of wheel revolutions, and of sufficient length to average out all disturbances due to vibrations and/or cyclist movements,
   - computing the linear acceleration $\alpha$ by processing the signal from said wheel revolution sensor and, for best accuracy, also in coincidence with said integer number of wheel revolutions,
   - isolating the sole gravity field components $g\,sin\alpha$ and
   - computing the true road gradient $\alpha$;
   - computing the power generated by the cyclist and
   - computing the altitude relative to a starting location, previously chosen by the cyclist, from the computed mean of $sin\alpha$ at the end of each one of said averaging time intervals.

2. A device as claimed in Claim 1, **characterised in that**
   the microprocessor is further arranged for

   - measuring the power on road stretches with very small or null gradient by introducing a calibration procedure whereby the cyclist stops cycling, pushes a button, and while he refrains from cycling the microprocessor computes from the evolution of the bicycle deceleration the overall force $F(V)$, $V$ being the bicycle speed, resulting from all motion resistances, such as frictions and aerodynamic drag and
   - correcting the measured power generated by the cyclist by using said resulting force $F(V)$ and by adding the factor $dP = V*F(V)$.

3. A device as claimed in Claim 1 or Claim 2, **characterised in that** the microprocessor is further arranged for

   - extracting the frequency of oscillations noticeable on the accelerometer output signal and resulting from the push on the pedals by part of the cyclist by adding a suitable algorithm;
   - indicating the frequency of said oscillations on the display as frequency of pedalling and
   - indicating the gear ratio as *"frequency of pedalling"/"wheel revolutions frequency"*.

## Patentansprüche

1. Ein Fahrradinklinometer besteht aus:

einem Umdrehungssensor am Rad, als einem üblichen magnetischen Pick-up, und einem Mikroprozessor.

Er ist mit einem Beschleunigungsmesser versehen, der am Fahrrad mit der zur Bewegungsrichtung parallelen Messachse angebaut und zur Sendung eines Ausgabesignals eingestellt wird, das der gesamten Beschleunigung $g=sin\alpha$-$\alpha$ seine Achse entlang proportional ist.

Dieser Mikroprozessor wird wie folgt eingestellt:

- zur Verarbeitung des Ausgabesignals des obengenanten Radumdrehungssensors und des obengenanten Beschleunigungsmessers.
- zum Ausgleich des Abweichungswinkels der Beschleunigungsmesser- achse und der Bewegungsrichtung. Infolge einer nicht optimalen Montage der Vorrichtung am Fahrrad wird ein Einstellverfahren durch Positionieren des Fahrrades zuerst im Aufstieg und dann im Abstieg oder umgekehrt benötigt. Durch Teilung der beiden Messungen durch zwei wird der obengenante Abweichungswinkel erhalten.
- Zur Aufnahme des Ausgabesignals des Beschleunigungsmessers in einem angemessenen Zeitabstand zum Erhalt des durchschnittlichen Wertes der gesamten Beschleunigung $g=sin\alpha$ - $\alpha$ und bei einer ganzen Zahl der Radumdrehungen und einer Länge, die zum Filtrieren aller auf Radfahrervibrationen und/oder -schwingungen zurückzuführenden Störungen ausreicht.
- Zur Berechnung der Linearbeschleunigung durch Verarbeitung des Signals vom obengenanten Radumdrehungssensor und, zu einer besseren Genauigkeit, auch bei der obengenanten ganzen Zahl der Radumdrehungen.
- Zur Absonderung nur der Komponente des Schwerefeldes $g=sin\alpha$.
- Zur Berechnung der tatsächlichen Straßensteigung $\alpha$ .
- Zur Berechnung der Radfahrerleistung e.
- Zur Berechnung der Höhe bei einem vom Radfahrer früher gewählten Punkt, auf Grund des berechneten Durchschnitts von $sin\alpha$ am Ende jedes obengenanten durchschnittlichen Zeitabstands.

2. Bei der Vorrichtung, wie im Anspruch 1 beansprucht, ist der Mikroprozessor, außerdem, wie folgt voreingestellt:

- zur Messung der Leistung bei Strecken mit geringster oder keiner Steigung durch ein Einstellverfahren, bei dem der Radfahrer hält und ein Knopf druckt. Während er mit den Pedaltritten aufhört, berechnet der Mikroprozessor auf Grund der Entwicklung der Fahrradverzögerung die gesamte Kraft *F(V),* wo *V* die Geschwindigkeit des Fahrrades ist, die aus allen Bewegungswiderständen, sowie den Reibungen und dem Widerstand der Luftkraft, entsteht.
- zur Berichtigung der vom Radfahrer entwickelten gemessenen Leistung durch die obengenante resultierende Kraft *F(V)* und durch deren Erhöhung um den Faktor *dP* = *V\*F(V).*

3. Bei der Vorrichtung, wie im Anspruch 1 oder Anspruch 2 beansprucht, ist der Mikroprozessor, außerdem, wie folgt voreingestellt:

- zur Extrapolation der Frequenz der Schwingungen beim Ausgabesignal des Beschleunigungsmessers, die sich aus dem Radfahrerdruck auf den Pedalen ergibt, durch deren Erhöhung um einen angemessenen Algorithmus.
- Zur Angabe der Frequenz der obengenanten Schwingungen im Anzeigegerät als Pedaltrittfrequenz
- Zur Angabe des Übersetzungsverhältnisses als "Pedaltrittfrequenz" / Radumdrehungsfrequenz".

## Revendications

1. Un mesureur de pente pour bicyclette comprend :

    Un capteur de révolution sur la roue, similaire à un traditionnel pick-up magnétique et un microprocesseur.

    Il est **caractérisé par**:

    un accéléromètre monté sur la bicyclette avec le mesurage en direction de l'axe parallèl à la direction de voyage et arrangé pour produire un signal en sortie proportionnel à l'accélération totale *g=sin*$\alpha$ *-* $\alpha$ le long de son axe;

    Le susdit microprocesseur est arrangé pour:

- traiter le signal de sortie du dit capteur rotatif de la roue et du dit accéléromètre
- balancer l'angle déséquilibré entre l'axe de l'accéléromètre et la direction de voyage, dû au montage pas idéal du dispositif sur la bicyclette. Une procédure de calibrage est requise en positionnant la bicyclette de côte et après en descente au viceversa ; en divisant la différence des deux mesures par deux l'on obtient le susmentionné angle de déséquilibre.

- essayer le signal de sortie de l'accéléromètre pendant un intervalle adéquat de temps pour obtenir une valeur moyenne de l'accélération totale $g=sin\alpha - \alpha$ et en correspondance de un nombre entier de tours de la roue et une longueur suffisante pour filtrer tous les ennuis dûs aux vibrations et/ou à les oscillations du cycliste.
- calculer l'accélération linéaire en traitant le signal du susdit capteur de révolution de la roue et, pour plus de précision, aussi en coïncidence avec le susdit nombre entier de révolution de la roue
- isoler la seule composante du champ gravitationel $g=sin\alpha$ e
- calculer la réelle pente de la route $\alpha$
- calculer la force produite par le cycliste e
- calculer l'altitude relative en partant de un point choisi précédemment par le cycliste, de la moyenne calculé de $sin\alpha$ à la fin de chacun des susdits intervalles de temps moyens.

2. Un dispositif comme revendiqué dans la Revendication 1, **caractérisé** de façon que:

le microprocesseur est en outre arrangé pour :

- mesurer la puissance sur des tronçons de route avec très douce ou nulle pente en introduisant une procédure de calibrage pour lequel le cycliste s'arrête, presse un bouton et pendant qu'il s'abstient de pédaler le microprocesseur calcule de l'évoluer de la décélération de la bicyclette, la force globale **F(V)**, étant **(V)** la vitesse de la bicyclette, résultant de tous les résistances aux mouvements, comme frictions et résistance de la force aérodynamique **e**.
- corriger la force mesurée produite par le cycliste en employant la susdite force résultante **F(V)** et en l'augmentant du facteur **dP=V\*F(V)**

3. Un Dispositif comme revendiqué dans les Revendication 1 ou Revendication 2, **caractérisé** de façon que:

le microprocesseur est en outre arrangé pour :

- extraire la fréquence des oscillations visible sur le signal de sortie de l'accéléromètre et résultant de la poussée sur les pédales de la part du cycliste en l'augmentant avec un algorithme proportionné
- indiquer la fréquence des susdites oscillations sur le display comme fréquence de coup de pédale e.
- indiquer le rapport de transmission comme « fréquence de coup de pédale 1 fréquence de révolution de la roue »

**Figure 1- Schematic representation of the working principle**